(19) **Europäisches Patentamt**
**European Patent Office**
**Office européen des brevets**

(11) **EP 1 442 382 B1**

(12) **EUROPEAN PATENT SPECIFICATION**

(45) Date of publication and mention
of the grant of the patent:
**11.08.2010 Bulletin 2010/32**

(51) Int Cl.:
***G06F 9/50*** (2006.01)

(21) Application number: **02801033.8**

(22) Date of filing: **11.10.2002**

(86) International application number:
**PCT/US2002/032538**

(87) International publication number:
**WO 2003/032183 (17.04.2003 Gazette 2003/16)**

(54) **EFFICIENT SERVICE MANAGEMENT IN HOME GATEWAYS**

EFFIZIENTE DIENSTVERWALTUNG IN HAUS-GATEWAYS

GESTION EFFICACE DE SERVICES DANS DES PASSERELLES DOMESTIQUES

(84) Designated Contracting States:
**DE FR GB**

(30) Priority: **12.10.2001 US 329219 P**
**13.02.2002 US 75514**

(43) Date of publication of application:
**04.08.2004 Bulletin 2004/32**

(73) Proprietor: **Panasonic Corporation**
**Kadoma-shi**
**Osaka 571-8501 (JP)**

(72) Inventors:
 • **KAMEL, Ibrahim**
 **Monmouth Junction, NJ 08852 (US)**
 • **ELBASSIONI, Khaled**
 **Bolkly, Alexandria (EG)**
 • **CHEN, Beizhong**
 **Princeton, NJ 08540 (US)**

(74) Representative: **Chapman, Paul Nicholas**
**Atkinson & Company**
**Intellectual Property Limited**
**7 Moorgate Road**
**Rotherham**
**South Yorkshire S60 2EN (GB)**

(56) References cited:
**CA-A1- 2 267 549**    **US-A- 5 682 530**
**US-A1- 2001 034 758**    **US-A1- 2001 034 759**
**US-A1- 2001 036 192**    **US-A1- 2002 002 608**
**US-A1- 2002 099 627**    **US-B1- 6 356 978**

• **"FAIL-SAFE MESSAGE FOR INSUFFICIENT MEMORY CONDITIONS" IBM TECHNICAL DISCLOSURE BULLETIN, IBM CORP. NEW YORK, US, vol. 37, no. 1, January 1994 (1994-01), page 87, XP000428707 ISSN: 0018-8689**
• **DE CASTRO R S: "Compressed Caching: Linux 2.4 Virtual Memory Overview - oom_kill.c" INTERNET DOCUMENT, [Online] 13 May 2001 (2001-05-13), XP002371556 Retrieved from the Internet: URL:http://web.archive.org/web/ 20010513011 909/http:// linuxcompressed.sourceforge.net /vm24/oom_ kill.html> [retrieved on 2006-03-10]**
• **NOBLE J ET AL: "Proceeding of the Memory Preservation Society - Patterns for managing limited memory" INTERNET DOCUMENT, [Online] 13 September 1998 (1998-09-13), XP002370233 Retrieved from the Internet: URL: http://www.charlesweir.com/papers/Memp res8AsHtml.html> [retrieved on 2006-03-01]**

EP 1 442 382 B1

**Description**

Background of the Invention

The present invention relates generally to home gateways, and more particularly, to an efficient method for managing application services in a limited memory environment, such as a home gateway.

With the widespread introduction of broadband to homes, the Internet is becoming more and more popular inside homes. The Internet is used not only for connecting computing devices, but also for accessing home appliances, such as TVs, DVDs, washing machines, etc. In the near future, it is expected that many home appliances will be connected to the Internet. Remote diagnosis and configuration of these appliances is one of the many advantages that the consumer can gain from Internet connectivity. Power companies are also keeping an eye on home networking because it will allow them to provide value-added services such as energy management, remote measurement, and better power balance that reduces the likelihood of blackout.

There are several initiatives to define a specification and protocol for networks residing in the home environment, including OSGi, HAVi, UPnP, Jini, and HomeRF, to name a few. It is expected that such home networking will inter-operate through a home gateway. The home gateway serves as a single point of connection between the Internet and the home. Services are implemented in software bundles that can be downloaded separately from the Internet and then executed in the gateway.

There is not consensus among the industry on whether the home gateway will be integrated into existing home appliances, distributed among several home appliances, or centralized in a separate computing device. In either case, the home gateway will more than likely have limited resources, especially main memory.

Conventional memory management techniques are not necessarily suitable for home gateways. For instance, the memory unit in a conventional computing environment is the disk page. Conventional memory management techniques typically assume that disk pages are independent.

In contrast, the services in a home gateway may not be independent, but rather can depend from each other. In other words, terminating a service will in effect terminate all of the services that depend on that service. Because of service dependencies, traditional memory management techniques are not suitable to the gateway environment.

Therefore, it is desirable to provide an efficient method for managing application services in a limited memory environment, such as a home gateway.

[0007A] CA 2 267 549 A1 discloses a mechanism to identify what new application can be downloaded from a server to a device. Applications are packaged as application components, and they include information specifying their memory requirements. If the device has insufficient memory to download the application, then a policy object determines whether to unload other application components to make sufficient memory available.

[0007B] "Fail-Safe Message for Insufficient Memory Conditions" - IBM Technical Disclosure Bulletin, IBM Corp. New York, US, Vol. 37, No.1, January 1994, page 87 - discloses a solution to the problem of a system user receiving messages indicating insufficient memory to perform the current task. In an automatic implementation of the solution, the system automatically suspends applications to clear memory when more memory is required for the current task. Two example algorithms, for deciding which applications to close, involve selecting applications taking up most memory, and selecting applications that have been up the longest without having been accessed.

[0007C] "Compressed Caching: Linux 2.4 Virtual Memory Overview - oom_kill.c", University of Sao Paulo, XP-002371556, Internet document dated 13 May 2001 retrieved from URL:http://web.archive.org/web/2001 0513011909/http://linuxcompressed.sourceforge.net/vm24/oom_kill.html. This document describes aspects of the Linux 2.4 VM system, in particular oom_kill.c which has functions for killing processes when a system runs out of memory. oom_kill.c calls select_bad_process() which loops all tasks, calling badness() for each task. badness() calculates a numeric value, or points, for how "bad" the task has been, and the task with the highest points is returned by select_bad_process() for killing by oom_kill.c. The document lists some heuristic rules of badness() that are used to calculate the points.

[0007D] "Proceedings Of The Memory Preservation Society - Patterns For Managing Limited Memory", by J Nobel et al., XP-002370233, Internet document dated 13 September 1998 retrieved from URL:http://www.charlesweir.com/papers/Mempres8AsHtm).html. This document suggests that in a system where the system's available memory is low, this should be signaled. When an inactive process receives this signal it should voluntarily release its inessential memory, or, in more extreme situations, close down.

Summary of the Invention

In accordance with the present invention, a method is provided for managing memory resources in a service gateway environment as defined by claim 1.

For a more complete understanding of the invention, its objects and advantages, reference may be had to the following specification and to the accompanying drawings.

Brief Description of the Drawings

Figure 1 is a block diagram depicting a software architecture of an exemplary service gateway in accordance with the OSGi model;

Figure 2 is a diagram illustrating the memory resource problem of the present invention;

Figure 3 is a flow chart depicting a method for managing memory resources in a service gateway environment in accordance with the present invention;

Figure 4 is a flowchart depicting an alternative method for managing memory resources in a service gateway environment in accordance with the present invention;

Figure 5 is a diagram illustrating a post-order traversal of a plurality of service instances in accordance with the present invention; and

Figure 6 is a diagram illustrating an exemplary dynamic programming table in accordance with the present invention.

Detailed Description of the Preferred Embodiments

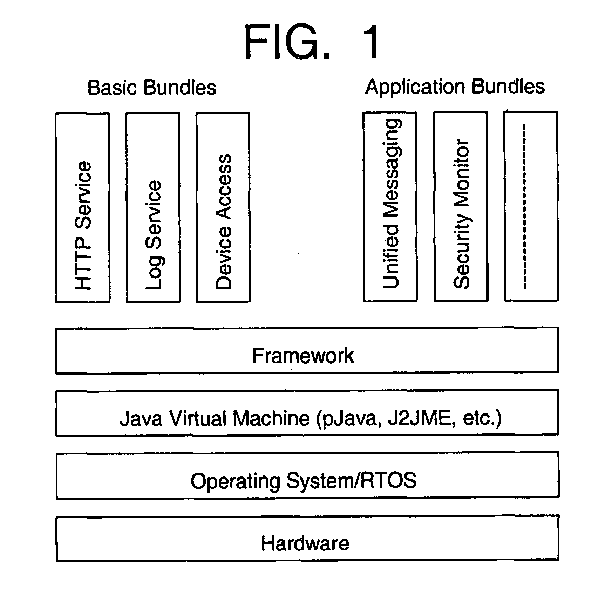

Figure 1 illustrates the software architecture of an exemplary service gateway in accordance with the OSGi model. OSGi specification defines common implementation APIs that are suitable for service gateways in a variety of different applications. While the following description is provided with reference to this particular software architecture from the OSGi model, it is readily understood that the broader aspects of the present invention encompass other software architectures as well as other known gateway specifications.

In a service gateway environment, applications are designed as a set of services, with each service implementing a segment of the overall functionality. These services and other extension services are then packaged into a software container called a bundle. The gateway can download the corresponding bundle when it becomes necessary. The framework handles basic bundle management functionality. In order to share its services with other bundles, a bundle can register any number of services with the framework. The execution thread of a bundle in the framework is referred to as a service instance.

To accommodate a new service, the gateway might need to free memory space associated with the gateway. Although the amount-of memory required to execute a service is changing with time, the application service provider (or the author who provides the bundle) can give approximate estimates such as average and maximum amount of memory required to execute the services in a bundle. At this time, the framework has to pick a victim service instance or instances to terminate in order to fulfill the request. It is envisioned that the victim service instance might be the requesting service.

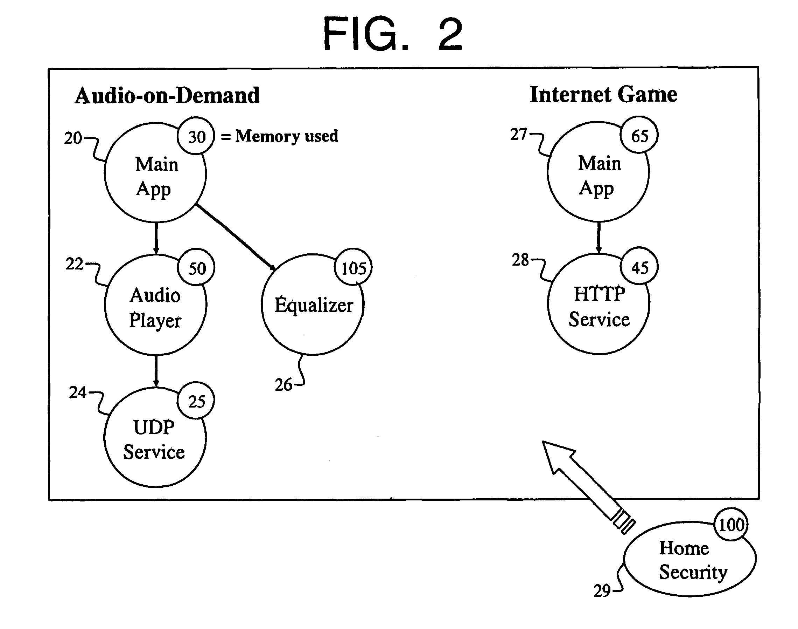

This memory resource problem is further illustrated by the example set forth in Figure 2. Two exemplary applications are executing in a service gateway environment. The first application is an audio-on demand service 20 which has a memory requirement of 30 memory units. The audio-on-demand service 20 depends on an audio player service 22 which in turn depends on a UDP service 24. The audio player service 22 and the UDP service 24 have a memory requirement of 50 and 25 memory units, respectively. The audio-on-demand service 20 also depends on an equalizer service 26 which has a memory requirement of 105 memory units. The second application is a Internet game 27 which has a memory requirement of 65 memory units. The Internet game service 27 depends on an HTTP service 28 which has a memory requirement of 45 memory units.

A request is made for a third service. The third service is a home security 29 service which requires 100 memory units. Assume that the memory space requirement for the home security service exceeds the total available memory space associated with the gateway environment. Lets further assume that the home security service has a higher priority than the audio-on-demand service and the game service. Therefore, at least one of the services must be terminated to meet this request. In this example, the equalizer service 26 should be terminated because it fulfills the memory space requirement and minimizes the number of service instances that are terminated.

A formal description of the problem is set forth below. The set of service instances currently resident in gateway memory may be defined as $S = \{s_i,...,s_j\}$.. A dependence graph may be used to model the dependencies among bundles, where one bundle imports a service provided by another bundle. For example, let G(S,E), be a directed acyclic graph with vertex set S and edge set E, describing the dependence among the service instances. There is a directed edge $(s_i, s_j) \in E$ if and only if $s_i$ depends on $s_j$. Since it is natural to assume that each application instantiates its own copy of a given service, the dependence graph will consist of a forest of rooted trees, where each tree represents the service instances instantiated by a given application. For a vertex v in G, let us denote by T(v) the set of vertices of the sub-tree of G rooted at v (including v itself), and for a subset of vertices $V \subseteq S$, let $T(V) := U_{v \in V} T(v)$.

Given that a new service instance s, with a memory space requirement $M(s)$, is to be created, it might be required to germinate some existing service instances in order to make room for the new instance. Assume that the additional memory required for this operation is $M_t$ units, where $M_t = M(s)-M_f$, and $M_f$ is the current amount of available memory space. When a service instance is terminated, all instances depending on it will also be terminated. Therefore, the objective is to reduce the number of terminated service instances. More precisely, it is desired to find a subset $V \subseteq S$ of minimal number of dependants, whose termination, together with all its dependants, will make available a total memory space of at least Mt units. Letting $M(S) := \Sigma_{s \in S}.M(s)$ for any $S' \subseteq S$, the problem can be formulated as of finding $min\{J|T(V)|: V \subseteq S, M(T(V)) \geq M_t\}$. In other words, the problem is to identify a minimal number of service instances whose memory space requirement exceeds the memory space requirement of a service request.

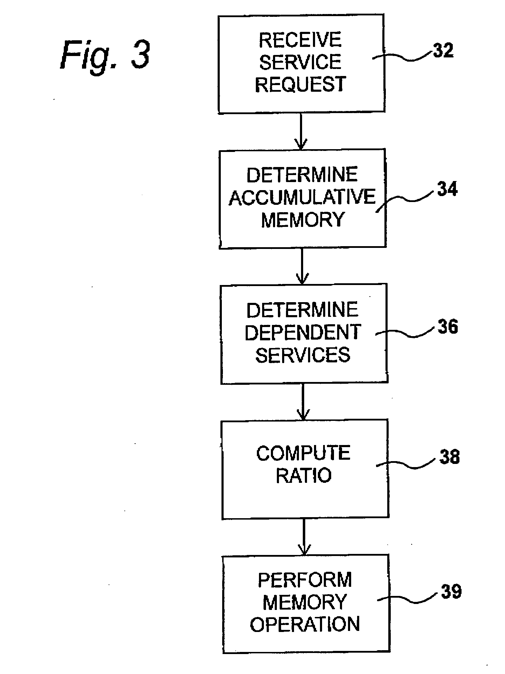

Referring to Figure 3, a method is provided for managing memory resources in a limited memory environment, where the at least some of the service instances are dependent on other service instances. This method provides one preferred solution to the problem set forth above. Upon receipt of a service request, the method is initiated at step 32, where the service request has a memory space requirement that exceeds the total available memory space associated with the gateway environment. In order to satisfy the service request, the method identifies one or more service instance (s) that are to be terminated from the environment.

First, an accumulative memory space requirement, $M(s^*)$, is determined at step 34 for each service instance resident in the gateway environment. The accumulative memory space requirement for a given service instance accounts for the memory requirement for the given service instances and each of the service instances upon which it depends. Thus, accumulative memory space is computed by summing the memory space requirements for the given service instance with the memory space requirement for each of the service instance upon which it depends.

Second, the number of dependent service instances, s*, is determined at step 36 for each service instance. In an exemplary embodiment, may be retrieved from a data store associated with the environment. The data store generally maintains dependency information for each of the service instances currently resident in the gateway environment. For each service instance, the data store may include an identifier for a given service instance, the accumulative memory space requirement for the given service instance, and the number of service instances that the given service instance depends on. Although presently preferred, it is envisioned that other techniques may be employed for determining the accumulative memory space requirement and number of dependencies for each service instance.

Third, a ratio is computed for each service instance at step 38. The ratio is further defined as the accumulative memory space requirement for a given service instance divided by the number of dependent service instances for the given service instance. Maximizing this ratio tends to decrease the number of terminated service instances.

Lastly, a memory resource operation is then performed at step 39 in relation to the service instance having the largest ratio. Specifically, the service instance having the largest ratio and each of the service instances upon which it depends are terminated. If two service instances have the same ratio, then the service instance having the fewest dependencies is selected for termination. One skilled in the art will readily recognize that the data store that maintains dependency information for each of the service instances is updated to account for the terminated service instances.

In some instance, the accumulative memory space requirement for the terminated service instance (and its dependents) may not exceed the requested memory space. In this case, the above-described process is repeated, thereby terminating additional service instances. On the other hand, once the total available memory space is equal to or exceeds the memory space requirement of the service request, the service request is satisfied.

There is also a natural generalization of problem set forth above. Suppose that different service instances differ in importance and, therefore, are assigned different priorities. In such a case, it is reasonable to assign a weight W(s) to each instance. Instances with large weights are considered more important. When it is necessary to eject some instances from memory, it is desirable to reduce the number of deleted high priority instances. Thus, the problem now becomes of finding $min \{W(T(V))/V \subseteq S, M(T(V)) \geq M_t\}$.

In the absence of dependencies, this problem is closely related to the well-known Knapsack problem. The Knapsack problem admits a pseudo polynomial algorithm which runs in $O(n^2 W)$, where W is the maximum weight. Even in the case of dependencies among service instances, a similar result holds for this problem as shown below.

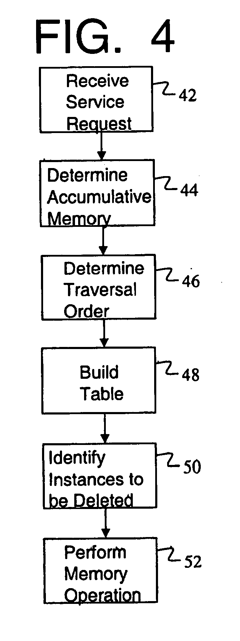

In view of the foregoing, an alternative method is presented for managing memory resources in a limited memory environment, such as a service gateway. Referring to Figure 4, the method is initiated at step 42 upon receipt of a service request. In order to satisfy the service request, the method identifies one or more service instance(s) that are to be deleted from the environment. The technique generally uses dynamic programming.

An accumulative memory space requirement, M(s*), is first determined at step 44 for each service instance resident in the gateway environment. Next, an order is determined at step 46 for traversing the service instances in the gateway environment. The service instances are preferably traversed recursively in a post-order. Specifically, let $S = S_n = \{s_1, ..., s_n\}$ be the current set of service instances listed in post-order traversal (that is, recursively traverse the children from left to right then traverse the root). Consider incrementally the sets $S_1 = \{s_1\}, S_2 = \{s_1, s_2\}, S_3 = \{s_1, s_2, s_3\}, ...,$ computing for each set the maximum amount of memory that can be achieved by deleting a subset of service instances at given number of dependents. In order to compute these maxima, compute for each node $s_i$, the largest index $k \in \{1, ..., i-1\}$ such that $s_k$ is not a descendant of $s_i$. Let $L(s_i)$ denote such an index. The procedure gives the post-order traversal of a given forest and computes the required indices $L(s_i)$ for each $i=1, ..., n$.

For instance, an exemplary procedure for post-order traversal of a given subtree of the dependence forest G rooted at v and an integer k, is as follows:

```
1. If |T(v)|=0      // tree is empty
      return.
2. If |T(v)|=1      // v is a leaf node
             L(v) ← k.
3. else for each child u of v:
             traverse (u,G,k);
4. L(v) ←L(leftmost(v));
5. k ← k+1;
6. sk ← v.
```

This procedure yields the post order-traversal traversal $\{s_k, s_{k+1}, ..., s_{|T(v)|+k-1}\}$ of T(v), and the set of indices $\{L(s)|s \in T(v)\}$.
If the connected components of the forest G are $C_1$, $C_2$, ..., $C_r$, then in order to compute the post-order traversal for G, the above procedure is called r times:

```
1. Find the connected components C1, C2, ..., Cr of G.

2. k←0.
3. For i=1 to r
        traverse(root(Ci), G, k).
```

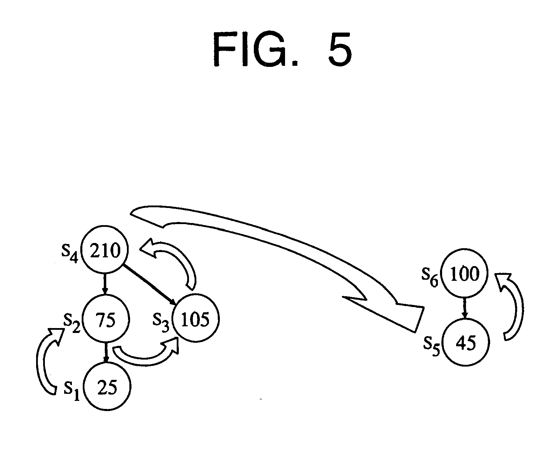

Thus, this procedure yields the post-order traversal $\{s_1, s_2, ..., s_n\}$ of G, and the set of indices $\{L(s)|s \in V(G)\}$. This procedure is illustrated briefly in Figure 5. However, it is envisioned that other traversal orders are also with the scope of the present invention.

Returning to Figure 4, a dynamic programming table is then built at step 48, such that the entries in the table indicate an amount of memory space that can be attained by deleting a subset of the service instances. In what follows, nodes $u, v \in V(G)$, will be said to be incomparable if neither is a descendant of the other, i.e., $v \notin T(u)$ and $u \notin T(v)$. Note that n is a trivial upper bound on the total number of instances (or weight) that can be achieved by any solution. For each $i \in \{1, ..., n\}$ and each $w \in \{1, ..., n\}$, let $S_{i,w}$ denote a subset, of incomparable elements of $S_i = \{s_1, ..., s_i\}$, whose total weight is exactly w, and whose total memory is maximized. Let $A(i, w) = M(T(S_{i,w}))$ if the set $S_{i,w}$ exists, and $A(i, w) = -\infty$ otherwise:

$$A(i,w) = \begin{cases} -\infty & \textit{if there is no set } S \subseteq S_i \textit{ of incomparable elements such that } |T(S)| = w, \\ 0 & \textit{if } i = 0 \textit{ or } w = 0, \\ \max\left\{M(T(S)) \middle| S \subseteq S_i, |T(S)| = w, \textit{elements of } S \textit{ are incomparable}\right\} & \textit{otherwise.} \end{cases}$$

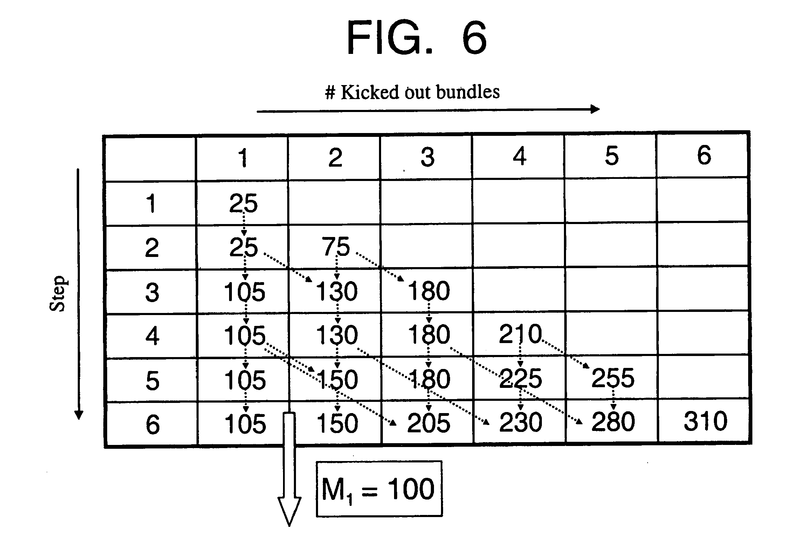

The dynamic programming table is constructed such that each row of the table correlates to a subset of service instances in accordance with the post-order and each column correlates to a number of service instances that are to be deleted from the subset. Specifically, A(1,w) is known for every $w \in \{1, ..., n\}$; whereas the other values of A(i,w) can be computed incrementally using the following recurrence: $A(i + 1, w) = max \{A(i,w), M(s_{i+1}) + A(L(s_{i+1}), W-|T(s_{i+1})|)\}$, if $|T(s_{i+1})| < w$ and $A(i+1, w) = A(i, w)$ otherwise. As a result, each entry in the table indicates a maximum amount of memory space that can be attained by deleting the corresponding number of service instances from the corresponding subset of service instances. An exemplary dynamic programming table is shown in Figure 6.
Lastly, one or more service instances are identified using the dynamic programming table at step 50. In particular, the service instances are identified by evaluating from left to right the bottom row of the table. The first table entry whose value (i.e., memory space) exceeds the memory space of the service request is selected, where the table entry correlates to a subset of service instances that to the deleted. The corresponding subset of service instances are then deleted at step 52, thereby fulfilling the service request. A more formal description of this alternative algorithm is as follows:

```
1. For each node s∈S, compute the accumulative size and memory:
      c(s) ←|T(s)| and m(s) ← M(T(s)).
2. Call Traverse- forest (G) to get the post-order traversal
{s1,s2,...,sn} of G, and the set of indices {L(s) | s ∈V (G)}.
3. Initialize:
```

```
        A(i,0) =0 for all i=1,...,n,
        A(0,w) =0 for all w=1,...,n,
        A(1,1) =m(st), and A(1,w) = -∞ for all w=2,...,n.
 // build dynamic programming table
 4. For i=1 to n
 5. For w=1 to n
        if c(si+1) < w
          if A(i, w) ≥ m(si+1) + A(L(si+1), w -c(si+1))
             A(i+1,w) ← A(i,w);
             B(i+1,w) ← 0
           else
              A(i + 1, w) ← m(si+1) + A(L(si+1), w - c(si+1));
             B(i+1,w) ← 1
             else
            A(i+1 ,w) ←A(i,w);
           B(i+1,w) ←0.
 // compute optimal solution
 6. S←∅; i ← n; k ← min{w∈ [n] : A(i,w) ≥ Mt}.
 7. While i > 0
 8. if B(i, k)=1
    S ← S U {si}; i ← L(si); k ← k - c(si).
 else
    i← i -1.
 9. For each s ∈ S, delete T(s).
```

As will be apparent to one skilled in the art, an $O(n^2)$ time and $O(n^2)$ space is required for solving this problem in accordance with this alternative algorithm.

The foregoing discloses and describes merely exemplary embodiments of the present invention. One skilled in the art will readily recognize from such discussion, and from accompanying drawings and claims, that various changes, modifications, and variations can be made therein without departing from the scope of the present invention.

**Claims**

1. A method for managing memory resources in a service gateway environment, the gateway environment having a plurality of service instances (20, 22, 24, 26, 27, 28) where at least one of the service instances (20, 22, 27) being dependent on another service instance (22, 24, 26, 28), comprising:

   receiving a service request, the service request having an associated memory space requirement that exceeds total available memory space associated with the gateway environment;
   for each given service instance, identify a subset of service instances comprising the given service instance and any other service instances upon which the given service instance depends; and
   performing a memory resource management operation in relation to an identified subset of service instances, **characterised in that**:

   said method comprises the steps of:

   for each given service instance, determining (34, 44) an accumulative memory space requirement by summing the memory space requirements for each service instance of the subset identified for the given service instance ;
   identifying (50) a service instance whose accumulated memory space requirement exceeds the memory space requirement of the service request, the subset identified for said identified service instance having a minimal number of the service instances; and
   performing (39, 52) said memory resource management operation comprising deleting the identified subset of service instances for the identified service instance.

2. The method of Claim 1 wherein the step of identifying a subset of service instances further comprises determining (38) a ratio for each service instance, where the ratio is defined as the accumulative memory space requirement divided by the number of service instances upon which a given service instance depends on, and deleting the service instance having the largest ratio and each of the service instances upon which the service instance having the largest ratio depends on.

3. The method of Claim 1 further comprises determining (38) a ratio for each service instance, where the ratio is defined as the accumulative memory space requirement divided by the number of service instances upon which a given service instance depends on; and performing a memory resource management operation in relation to the service instance having the largest ratio.

4. The method of Claim 3 wherein the step of performing a memory resource management operation further comprises deleting the service instance having the largest ratio and each of the services instances that depend from the service instance having the largest ratio.

5. The method of Claim 4 further comprises:

determining the total available memory space associated with the gateway environment, after the step of deleting the service instance;
determining whether the memory space requirement of the service request exceeds the total available memory space associated with the gateway environment; and
repeating the steps of Claim 1 when the memory space requirement of the service request exceeds the total available memory space associated with the gateway environment.

6. The method of Claim 5 further comprises the step of performing the service request when the memory space requirement of the service request is less than or equal to the total available memory space associated with the gateway environment.

7. The method of Claim 5 further comprises maintaining a data store for the plurality of service instances, wherein the data store includes an identifier for a given service instance, the accumulative memory space requirement for the given service instance, and the number of service instances upon which a given service instance depends on.

8. The method of Claim 1 further comprises determining (46) an order for traversing the plurality of service instances; traversing the plurality of service instances; determining sets of service instances from the plurality of service instances traversed; for each set of service instances, computing an amount of memory space that will be attained by deleting a given subset of service instances; building (48) a dynamic programming table using the computed amounts of memory as entries in the table; and identifying (50) one or more service instances that are to be deleted using the dynamic programming table.

9. The method of Claim 8 wherein the step of determining (46) an order for traversing further comprises recursively traversing service instances in a post-order.

10. The method of Claim 9 where the step of building (48) a dynamic programming table further comprises defining each row in the table to correlate to a subset of the service instances in accordance with the post-order and defining each column in the table to correlate to a number of service instances that are to be deleted from the subset of service instances, such that each entry in the table indicates a maximum amount of memory space that can be attained by deleting the corresponding number of service instance from the corresponding subset of service instances.

11. The method of Claim 8 wherein the step of identifying (50) one or more service instances that are to be deleted further comprises evaluating from left to right the entries of a bottom row of the dynamic programming table and selecting service instances that correspond to an entry whose memory space exceeds the memory space requirement of the service request.

**Patentansprüche**

1. Eine Methode zur Verwaltung von Speicherressourcen in einer Service-Gateway-Umgebung, **dadurch gekennzeichnet, dass** die Gateway-Umgebung eine Pluralität von Service-Instanzen (20, 22, 24, 26, 27, 28) aufweist, wobei mindestens eine der Service-Instanzen (20, 22, 27) von einer anderen Service-Instanz (22, 24, 26, 28) abhängig ist, bestehend aus den folgenden Elementen:

Empfangen eines Service-Aufrufs, wobei der Service-Aufruf eine zugehörige Speicherplatzanforderung aufweist, die den insgesamt vorhandenen mit der Gateway-Umgebung verbundenen Speicherplatz überschreitet;

Identifizierung einer Teilmenge von Service-Instanzen für jede gegebene Service-Instanz, wobei die Teilmenge die gegebene Service-Instanz und andere Service-Instanzen umfasst, von denen die gegebene Service-Instanz abhängig ist; und
Durchführung einer Speicherressourcen-Managementoperation in Bezug auf eine identifizierte Teilmenge von Service-Instanzen, **dadurch gekennzeichnet, dass** die Methode die folgenden Schritte umfasst:

Bestimmung (34, 44) einer zunehmenden Speicherplatzanforderung für jede gegebene Service-Instanz durch die Zusammenfassung der Speicherplatzanforderungen für jede Service-Instanz der für die gegebene Service-Instanz identifizierten Teilmenge;
Identifizierung (50) einer Service-Instanz, deren zunehmende Speicherplatzanforderung die Speicherplatzanforderung des Service-Aufrufs überschreitet, wobei die für die besagte Service-Instanz identifizierte Teilmenge eine Mindestanzahl der Service-Instanzen aufweist; und
Durchführung (39, 52) besagter Speicherressourcen-Managementoperation, welche die Löschung der identifizierten Teilmenge von Services-Instanzen für die identifizierte Service-Instanz umfasst.

2. Die Methode gemäß Anspruch 1, **dadurch gekennzeichnet, dass** der Schritt zur Identifizierung einer Teilmenge von Service-Instanzen des Weiteren die Bestimmung (38) eines Verhältniswerts für jede Service-Instanz beinhaltet, wobei der Verhältniswert als die zunehmende Speicherplatzanforderung geteilt durch die Anzahl der Service-Instanzen definiert wird, von denen eine gegebene Service-Instanz abhängig ist, und das Löschen der Service-Instanz mit dem größten Verhältniswert und jeder der Service-Instanzen, von denen die Service-Instanz mit dem größten Verhältniswert abhängig ist.

3. Die Methode gemäß Anspruch 1, **dadurch gekennzeichnet, dass** die Methode des Weiteren die folgenden Schritte umfasst:

Bestimmung (38) eines Verhältniswerts für jede Service-Instanz, wobei der Verhältniswert als die zunehmende Speicherplatzanforderung geteilt durch die Anzahl der Service-Instanzen definiert wird, von denen eine gegebene Service-Instanz abhängig ist; und
Durchführung einer Speicherressourcen-Managementoperation in Bezug auf die Service-Instanz mit dem größten Verhältniswert.

4. Die Methode gemäß Anspruch 3, **dadurch gekennzeichnet, dass** der Schritt zur Durchführung einer Speicherressourcen-Managementoperation des Weiteren die Löschung der Service-Instanz mit dem größten Verhältniswert und jeder der Service-Instanzen umfasst, die von der Service-Instanz mit dem größten Verhältniswert abhängig sind.

5. Die Methode gemäß Anspruch 4, **dadurch gekennzeichnet, dass** die Methode des Weiteren die folgenden Schritte umfasst:

Bestimmung des insgesamt verfügbaren mit der Gateway-Umgebung verbundenen Speicherplatzes nach dem Schritt der Löschung der Service-Instanzen;
Bestimmung, ob die Speicherplatzanforderung des Service-Aufrufs den insgesamt verfügbaren mit der Gateway-Umgebung verbundenen Speicherplatz überschreitet; und
Wiederholung der Schritte von Anspruch 1, wenn die Speicherplatzanforderung des Service-Aufrufs den insgesamt verfügbaren mit der Gateway-Umgebung verbundenen Speicherplatz überschreitet.

6. Die Methode gemäß Anspruch 5, **dadurch gekennzeichnet, dass** die Methode des Weiteren den Schritt der Durchführung des Service-Aufrufs umfasst, wenn die Speicherplatzanforderung des Service-Aufrufs dem insgesamt verfügbaren mit der Gateway-Umgebung verbundenen Speicherplatz entspricht oder geringer als dieser ist.

7. Die Methode gemäß Anspruch 5, **dadurch gekennzeichnet, dass** die Methode des Weiteren die Aufrechterhaltung eines Datenspeichers für die Pluralität von Service-Instanzen umfasst, wobei der Datenspeicher einen Identifizierer für eine gegebene Service-Instanz, die zunehmende Speicherplatzanforderung für die gegebene Service-Instanz und die Anzahl der Service-Instanzen enthält, von denen eine gegebene Service-Instanz abhängig ist.

8. Die Methode gemäß Anspruch 1, **dadurch gekennzeichnet, dass** die Methode des Weiteren die folgenden Schritte umfasst:

Bestimmung (46) einer Reihenfolge zur Traversierung der Pluralität von Service-Instanzen;

Traversierung der Pluralität von Service-Instanzen;

Bestimmung von Mengen von Service-Instanzen aus der Pluralität der durchlaufenen Service-Instanzen;

Errechnung einer Speicherplatzmenge für jede Menge von Service-Instanzen, die durch die Löschung einer gegebenen Teilmenge von Service-Instanzen erreicht wird;

Aufstellung (48) einer dynamischen Programmiertabelle unter Verwendung der errechneten Speichermengen als Einträge in die Tabelle; und

Identifizierung (50) einer oder mehrerer Service-Instanzen, die unter Verwendung der dynamischen Programmiertabelle gelöscht werden sollen.

**9.** Die Methode gemäß Anspruch 8, **dadurch gekennzeichnet, dass** der Schritt zur Bestimmung (46) einer Reihenfolge zur Traversierung des Weiteren rekursiv traversierende Service-Instanzen in einer Nebenreihenfolge (Postorder) umfasst.

**10.** Die Methode gemäß Anspruch 9, **dadurch gekennzeichnet, dass** der Schritt der Aufstellung (48) einer dynamischen Programmiertabelle des Weiteren die Definierung jeder Zeile in der Tabelle zur Korrelation mit einer Teilmenge von Service-Instanzen gemäß der Nebenreihenfolge und die Definierung jeder Spalte in der Tabelle zur Korrelation mit einer Anzahl von Service-Instanzen umfasst, die aus der Teilmenge von Service-Instanzen gelöscht werden sollen, so dass jeder Eintrag in der Tabelle eine maximale Speicherplatzmenge bezeichnet, die durch das Löschen der entsprechenden Anzahl von Service-Instanzen aus der entsprechenden Teilmenge von Service-Instanzen erzielt werden kann.

**11.** Die Methode gemäß Anspruch 8, **dadurch gekennzeichnet, dass** der Schritt der Identifizierung (50) einer oder mehrerer zu löschender Service-Instanzen des Weiteren die von links nach rechts gerichtete Bewertung der Einträge einer unteren Zeile der dynamischen Programmiertabelle und die Auswahl von Service-Instanzen umfasst, die einem Eintrag entsprechen, dessen Speicherplatz die Speicherplatzanforderungen des Service-Aufrufs überschreitet.

**Revendications**

**1.** Un procédé de gestion de ressources de mémoire dans un environnement de passerelle de services, l'environnement de passerelle ayant une pluralité d'instances de service (20, 22, 24, 26, 27, 28) où au moins une des instances de service (20, 22, 27) dépend d'une autre instance de service (22, 24, 26, 28), consistant à :

recevoir une demande de services, la demande de services ayant un besoin d'espace mémoire associé supérieur à l'espace mémoire total disponible associé à l'environnement de passerelle ;

pour chaque instance de service donnée, identifier un sous-ensemble d'instances de service comprenant l'instance de service donnée et toutes les autres instances de service dont dépend l'instance de service donnée ; et

exécuter une opération de gestion de ressources de mémoire en relation avec un sous-ensemble d'instances de service identifié, **caractérisé en ce que** :

ledit procédé comprend les étapes suivantes :

pour chaque instance de service donnée, déterminer (34, 44) un besoin d'espace mémoire cumulé en additionnant les spécifications d'espace mémoire de chaque instance de service du sous-ensemble identifié de l'instance de service donnée ;

identifier (50) une instance de service dont le besoin en espace mémoire cumulé est supérieur au besoin en espace mémoire de la demande de services, le sous-ensemble identifié pour ladite instance de service identifiée ayant un nombre minimal d'instances de service ; et

exécuter (39, 52) ladite opération de gestion de ressources de mémoire consistant à supprimer le sous-ensemble d'instances de service identifié de l'instance de service identifiée.

**2.** Le procédé de la revendication 1 où l'étape d'identification d'un sous-ensemble d'instances de service consiste en plus à déterminer (38) un ratio pour chaque instance de service, où le ratio est défini comme étant le besoin en espace mémoire cumulé, divisé par le nombre d'instances de service dont dépend une instance de service donnée, et à supprimer l'instance de service ayant le ratio le plus grand et chacune des instances de service dont dépend l'instance de service ayant le ratio le plus grand.

**3.** Le procédé de la revendication 1 consiste en plus à déterminer (38) un ratio pour chaque instance de service, où le ratio est défini comme étant le besoin en espace mémoire cumulé, divisé par le nombre d'instances de service dont dépend une instance de service donnée ; et
exécuter une opération de gestion de ressources de mémoire en relation avec l'instance de service ayant le ratio le plus grand.

**4.** Le procédé de la revendication 3 où l'étape d'exécution d'une opération de gestion de ressources de mémoire consiste en plus à supprimer l'instance de service ayant le ratio le plus grand et chacune des instances de service qui dépend de l'instance de service ayant le ratio le plus grand.

**5.** Le procédé de la revendication 4 consiste en plus à :

déterminer l'espace mémoire total disponible associé à l'environnement de passerelle, après l'étape de suppression de l'instance de service ;
déterminer si le besoin en espace mémoire de la demande de services est supérieur à l'espace mémoire total disponible associé à l'environnement de passerelle ; et
répéter les étapes de la revendication 1 lorsque le besoin en espace mémoire de la demande de services est supérieur à l'espace mémoire total disponible associé à l'environnement de passerelle.

**6.** Le procédé de la revendication 5 comprend en plus l'étape d'exécution de la demande de services lorsque le besoin en espace mémoire de la demande de services est inférieur ou égal à l'espace mémoire total disponible associé à l'environnement de passerelle.

**7.** Le procédé de la revendication 5 consiste en plus à tenir à jour un magasin de données pour la pluralité d'instances de service, où le magasin de données inclut un identificateur d'une instance de service donnée, le besoin en espace mémoire cumulé de l'instance de service donnée et le nombre d'instances de service dont dépend une instance de service donnée.

**8.** Le procédé de la revendication 1 consiste en plus à déterminer (46) un ordre pour parcourir la pluralité d'instances de service ; parcourir la pluralité d'instances de service ; déterminer des ensembles d'instances de service parmi la pluralité d'instances de service parcourues ; pour chaque ensemble d'instances de service, calculer une quantité d'espace mémoire qui sera atteinte en supprimant un sous-ensemble donné des instances de service ;
créer (48) une table de programmation dynamique en utilisant les quantités de mémoire calculées comme des entrées dans la table ; et identifier (50) une ou plusieurs instances de service qui doivent être supprimées en utilisant la table de programmation dynamique.

**9.** Le procédé de la revendication 8 où l'étape de détermination (46) d'un ordre de parcours consiste en plus à parcourir de manière récurrente les instances de service dans un ordre postérieur.

**10.** Le procédé de la revendication 9 où l'étape de création (48) d'une table de programmation dynamique consiste en plus à définir chaque rangée de la table pour être en corrélation avec un sous-ensemble des instances de service conformément à l'ordre postérieur et à définir chaque colonne de la table pour être en corrélation avec un certain nombre d'instances de service qui doivent être supprimées du sous-ensemble d'instances de service, de telle sorte que chaque entrée de la table indique une quantité maximum d'espace mémoire qui peut être atteinte en supprimant le nombre correspondant d'instances de service du sous-ensemble correspondant des instances de service.

**11.** Le procédé de la revendication 8 où l'étape d'identification (50) d'une ou de plusieurs instances de service qui doivent être supprimées consiste en plus à évaluer de gauche à droite les entrées d'une rangée inférieure de la table de programmation dynamique et à sélectionner les instances de service qui correspondent à une entrée dont l'espace mémoire est supérieur au besoin en espace mémoire de la demande de services.

# FIG. 1

**Basic Bundles**

- HTTP Service
- Log Service
- Device Access

**Application Bundles**

- Unified Messaging
- Security Monitor

| Framework |
| --- |

| Java Virtual Machine (pJava, J2JME, etc.) |

| Operating System/RTOS |

| Hardware |

EP 1 442 382 B1

# FIG. 2

Audio-on-Demand

20 — Main App (30) = Memory used

22 — Audio Player (50)

26 — Équalizer (105)

24 — UDP Service (25)

Internet Game

27 — Main App (65)

28 — HTTP Service (45)

29 — Home Security (100)

EP 1 442 382 B1

*Fig. 3*

```
┌──────────────────┐
│     RECEIVE      │
│     SERVICE      │ ╴╴32
│     REQUEST      │
└──────────────────┘
          │
          ▼
┌──────────────────┐
│    DETERMINE     │
│   ACCUMULATIVE   │ ╴╴34
│     MEMORY       │
└──────────────────┘
          │
          ▼
┌──────────────────┐
│    DETERMINE     │
│    DEPENDENT     │ ╴╴36
│    SERVICES      │
└──────────────────┘
          │
          ▼
┌──────────────────┐
│                  │
│    COMPUTE       │ ╴╴38
│    RATIO         │
└──────────────────┘
          │
          ▼
┌──────────────────┐
│    PERFORM       │
│    MEMORY        │ ╴╴39
│    OPERATION     │
└──────────────────┘
```

EP 1 442 382 B1

# FIG. 4

```
┌──────────────┐
│   Receive    │
│   Service    ├─⌇ 42
│   Request    │
└──────┬───────┘
       ↓
┌──────────────┐
│  Determine   │
│ Accumulative ├─⌇ 44
│   Memory     │
└──────┬───────┘
       ↓
┌──────────────┐
│  Determine   │
│  Traversal   ├─⌇ 46
│   Order      │
└──────┬───────┘
       ↓
┌──────────────┐
│    Build     ├─⌇ 48
│   Table      │
└──────┬───────┘
       ↓
┌──────────────┐
│   Identify   │
│ Instances to ├─⌇ 50
│ be Deleted   │
└──────┬───────┘
       ↓
┌──────────────┐
│   Perform    │
│   Memory     ├─⌇ 52
│  Operation   │
└──────────────┘
```

EP 1 442 382 B1

# FIG. 5

EP 1 442 382 B1

# FIG. 6

# Kicked out bundles

| Step | 1 | 2 | 3 | 4 | 5 | 6 |
|------|-----|-----|-----|-----|-----|-----|
| 1 | 25 | | | | | |
| 2 | 25 | 75 | | | | |
| 3 | 105 | 130 | 180 | | | |
| 4 | 105 | 130 | 180 | 210 | | |
| 5 | 105 | 150 | 180 | 225 | 255 | |
| 6 | 105 | 150 | 205 | 230 | 280 | 310 |

$M_1 = 100$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CA 2267549 A1

### Non-patent literature cited in the description

- Fail-Safe Message for Insufficient Memory Conditions. IBM Technical Disclosure Bulletin. IBM Corp, January 1994, vol. 37, 87
- *Compressed Caching: Linux 2.4 Virtual Memory Overview - oom_kill.c,* 13 May 2001, http://web.archive.org/web/2001
- **J Nobel et al.** *Proceedings Of The Memory Preservation Society - Patterns For Managing Limited Memory,* 13 September 1998, http://www.charlesweir.com/papers/Mempres8AsHtm